Europäisches Patentamt

European Patent Office

Office européen des brevets

(11) Veröffentlichungsnummer : **0 189 479 B1**

(12) **EUROPÄISCHE PATENTSCHRIFT**

(45) Veröffentlichungstag der Patentschrift :
01.02.89

(51) Int. Cl.⁴ : **G 11 B 23/023**

(21) Anmeldenummer : **85904436.4**

(22) Anmeldetag : **10.08.85**

(86) Internationale Anmeldenummer :
**PCT/EP 85/00411**

(87) Internationale Veröffentlichungsnummer :
**WO/86013 (27.02.86 Gazettee 86/05)**

(54) BEHÄLTER FÜR MAGNETBANDKASSETTEN.

(30) Priorität : **17.08.84 DE 8424401 U**

(43) Veröffentlichungstag der Anmeldung :
**06.08.86 Patentblatt 86/32**

(45) Bekanntmachung des Hinweises auf die Patenterteilung : **01.02.89 Patentblatt 89/05**

(84) Benannte Vertragsstaaten :
**DE FR GB IT**

(56) Entgegenhaltungen :
EP--A-- 0 112 436
EP--A-- 0 134 279
DE--A-- 3 103 834
FR--A-- 2 311 379
GB--A-- 2 092 109
US--A-- 3 995 921
US--A-- 4 191 292

(73) Patentinhaber : **idn inventions and development of novelties ag**
**Hartbertstrasse 9**
**CH-7002 Chur (CH)**

(72) Erfinder : **ACKERET, Peter**
**Allmendstrasse 18**
**CH-8700 Küsnacht (CH)**

(74) Vertreter : **Dipl.-Ing. H. Marsch Dipl.-Ing. K. Sparing**
**Dipl.-Phys.Dr. W.H. Röhl Patentanwälte**
**Rethelstrasse 123**
**D-4000 Düsseldorf 1 (DE)**

**Beschreibung**

Die Erfindung betrifft einen Behälter für Magnetbandkassetten, insbesondere die weitverbreiteten Kompaktkassetten.

Ein Behälter, der die im Oberbegriff des Anspruchs 1 genannten Merkmale aufweist, ist aus der DE-PS 25 21 371 bekannt.

Bei dem bekannten Behälter ist das Entnehmen der Kassette unbequem, weil sie durch Fingerdruck von unten, wo der Schieber ein Loch aufweist, gehoben werden muß, und dann erst mit der anderen Hand erfaßt werden kann. Die Entnahme mit einer Hand dagegen erfordert einige Fingerfertigkeit.

Aus diesem Grund ist der bekannte Behälter wenig geeignet, vom Fahrer eines Kraftfahrzeuges bedient zu werden.

In der EP-A-0 112 436 ist ein Kassettenbehälter offenbart, bei dem die Kassette nach Ausschub des Schiebers aus dem Gehäuse mittels einer im Schieber eingebauten Hebevorrichtung soweit schräggestellt wird, daß sie über die Frontplatte des Schiebers hinweg entnehmbar ist. Es versteht sich, daß eine solche Konstruktion Mehraufwand gegenüber der eingangs genannten, bekannten Bauart erfordert.

Aufgabe der Erfindung ist es, einen Kassettenbehälter gemäß dem Oberbegriff des Anspruchs 1 derart auszubilden, daß er preisgünstig zu fertigen ist, jedoch problemlos bedienbar wird, insbesondere die Einhandbedienung durch den Fahrer eines Kraftfahrzeugs selbst bei Nacht ermöglicht.

Die erfindungsgemäße Lösung dieser Aufgabe ergibt sich aus den kennzeichnenden Merkmalen des Anspruchs 1 ; die Unteransprüche definieren bevorzugte Ausgestaltungen des Konzepts.

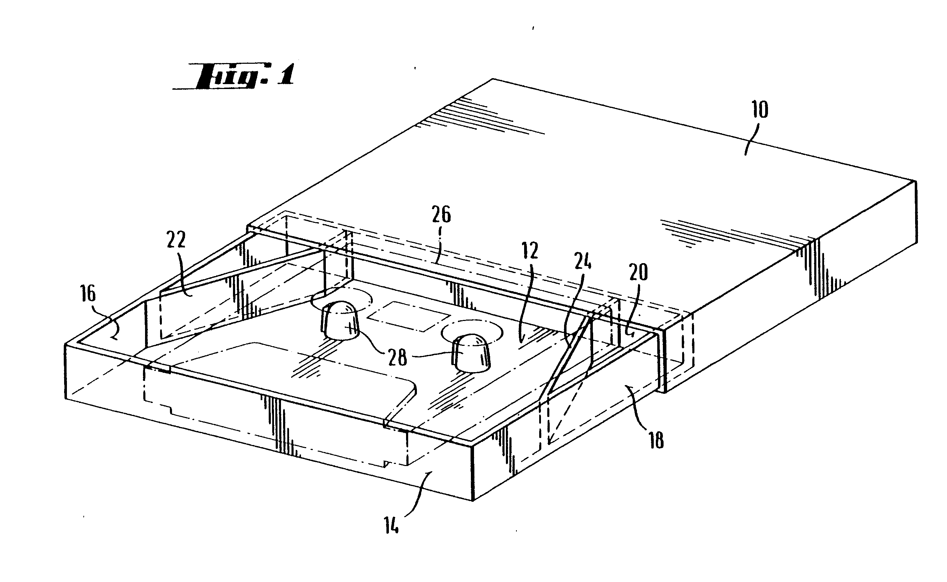

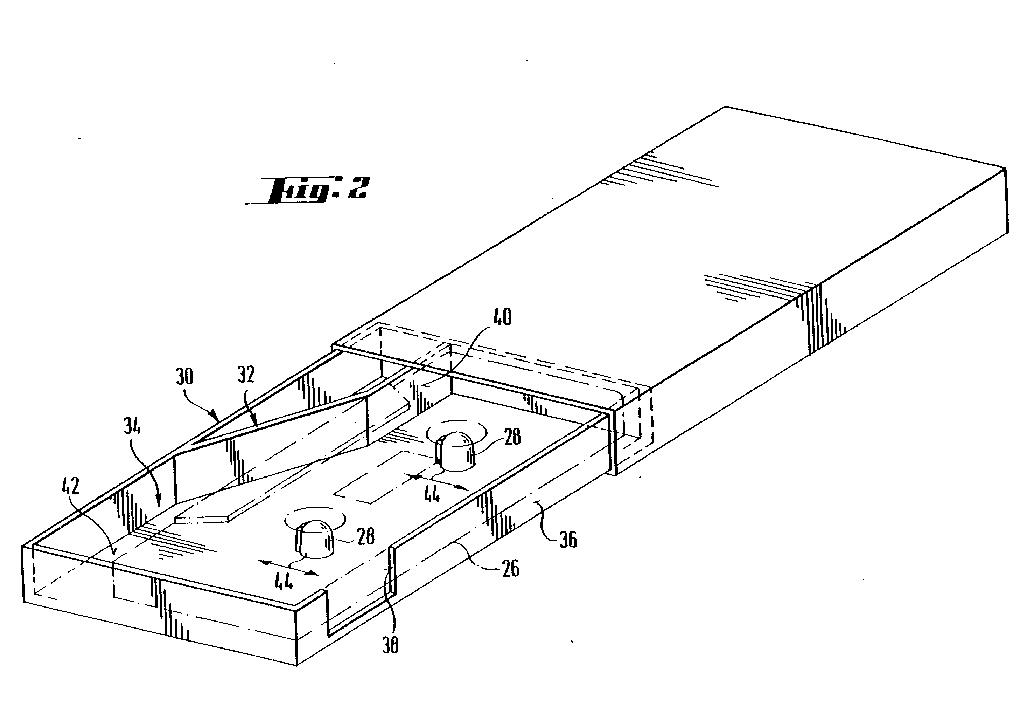

Zwei Ausführungsbeispiele sind in den Fig. 1 und 2 der Zeichnung dargestellt. Soweit in den Zeichnungen die Federanordnung, die Schieberführungen und die Schieberverriegelung nicht gezeichnet sind, kann auf die Offenbarung der eingangs genannten Druckschriften verwiesen werden.

Gemäß Fig. 1 ist das Gehäuse 10 auf seiner längeren Schmalseite offen. Der Schieber umfaßt eine Bodenplatte 12, eine Frontplatte 14 und Seitenwandungen 16 und 18 sowie eine Rückplatte 20. Zwischen den Seitenwandungen und der Rückplatte erstrecken sich angeformte Rippen 22 und 24, deren einander zugewandte Flächen zunächst schräg einwärts auf die Schieberrückplatte zu verlaufen und in ihrem letzten kurzen Abschnitt zueinander parallel sind.

Die Kassette 26 liegt im Schieber mit ihrem Kopfspiegel der Schieberfrontplatte zugewandt. Zwischen ihren kürzeren Schmalseiten und den Seitenwandungen 16 bzw. 18 bleibt ein Zwischenraum, in den der Benutzer von oben bequem hineinfassen kann, um die Kassette zu entnehmen. Dabei hebt er die Kassette auch von den Sperrnocken 28 ab, die vom Schieberboden 12 hochstehen. Um die Kassette einzulegen, führt der Benutzer die Kassette von oben schräg ein, wobei die Flächen der Rippen die Kassette in Ausfluchtung mit den Sperrnocken bringen, auf die die Kassette sich dann setzt.

Die Rippen 22 und 24 verleihen dem Schieber eine gute Biegefestigkeit, so daß die einzelnen Platten und Wandungen entsprechend dünn ausgeführt werden können.

Bei der Ausführungsform nach Fig. 2 liegt die Kassette 26 in Längsrichtung im Schieber 30, der hier nur eine Rippe 32 aufweist, die einen einseitigen, den Zugriff ermöglichenden Zwischenraum 34 definiert. Diesem gegenüber ist die Seitenwandung 36, an der eine Schmalseite der Kassette anliegt, mit einem Ausschnitt 38 versehen, wo die Kassette ebenfalls erfaßbar ist. Dieser Ausschnitt beeinträchtigt die Stabilität des Schiebers nur unwesentlich.

Bei den üblichen Kompaktkassetten ist der Abstand der Achsen der Bandwickelnaben von der Kopfspiegelkante größer als von der gegenüberliegenden Kante, die in der Darstellung der Fig. 2 der Seitenwandung 36 zugekehrt ist. Es ist jedoch erwünscht, daß der Benutzer die Kassette auch so einlegen kann, daß der Kopfspiegel dieser Seitenwandung zugekehrt liegt. Aus diesem Grunde ist der Abstand zwischen Seitenwand 36 und zu ihm parallelem Flächenabschnitt 40 der Rippe 32 so bemessen, daß die Kassette 26 beide möglichen Ruhepositionen einnehmen kann. Alternativ kann man die Sperrnocken auf dem Schieberboden 42 derart in Richtung des Pfeiles 44 beweglich anordnen, daß sie beim Aufsetzen der Kassette in beiden möglichen Ruhepositionen in deren Bandwickelnaben einrasten, wie dies im einzelnen in EP-A-0 134 279 beschrieben ist.

**Patentansprüche**

1. Behälter zum Aufbewahren von Magnetbandkassetten mit einem Gehäuse, das auf einer seiner Schmalseiten eine Öffnung aufweist, einem die Kassette aufnehmenden Schieber, der von einer Federanordnung im Gehäuse aus einer Aufbewahrungsposition, in der er sich im Gehäuse befindert und auslösbar verriegelt ist, längs Führungen in eine durch Anschläge festgelegte Position bewegbar ist, in der die Kassette entnehmbar bzw. einlegbar ist, und der eine in der Aufbewahrungsposition die Gehäuseöffnung abdeckende Frontplatte besitzt, an die sich Seitenwandungen anschließen, dadurch gekennzeichnet, daß der Schieber innen Leitflächen aufweist, längs denen eine einzulegende Kassette in eine Ruheposition im Schieber führbar ist, bei der zwischen der Kassette und mindestens einer der Seitenwandungen ein zum Erfassen der Kassette ausreichender Zwischenraum verbleibt.

2. Behälter nach Anspruch 1, dadurch gekennzeichnet, daß die Ruheposition durch auf einer Bodenplatte des Schiebers angeordnete, in die Bandwickelnaben der Kassette greifende Sperrnocken definiert ist.

3. Behälter nach Anspruch 1, dadurch gekennzeichnet, daß die andere Seitenwandung gegenüber dem Zwischenraum einen Ausschnitt aufweist.

4. Behälter nach Anspruch 2, für Kassetten, deren Bandwickelnabenachsen asymmetrisch bezüglich der Kassettenmitte sind, dadurch gekennzeichnet, daß der Schieber zur Aufnahme der Kassette in beiden möglichen Ruhepositionen dimensioniert ist und die Leitflächen für die Führung der Kassette in eine Position relativ zu den Sperrnocken ausgebildet sind, daß die Naben in beiden möglichen Ruhepositionen auf die Sperrnocken aufsetzbar sind.

## Claims

1. Container for storing magnetic tape cassettes with a housing which has an opening on one of its narrow sides, a slider member holding the cassette, which slider member is movable by means of a spring arrangement in the housing from a storage position, in which it is inside the housing and is releasably locked, along guide means into a position defined by stop members in which the cassette may be removed or inserted, and which slider member has a front plate covering the housing opening in the storage position, adjoining which front plate are side walls, characterised in that the slider member has guide faces on its inside along which a cassette to be inserted may be guided into a rest position in the slider member, wherein between the cassette and at least one of the side walls there is a gap sufficient for the cassette to be gripped.

2. Container according to claim 1, characterised in that the rest position is defined by locking projections arranged on a base plate of the slider member and engaging in the tape winding hubs of the cassette.

3. Container according to claim 1, characterised in that the other side wall opposite the gap has a cut-out.

4. Container according to claim 2 for cassettes, the tape winding hubs of which are asymmetrical with respect to the cassette middle, characterised in that the slider member for holding the cassette in both possible rest positions is of such dimensions, and the guide faces for guiding the cassette into a position relative to the locking projections are so constructed that the hubs may be placed on the locking projections in both possible rest positions.

## Revendications

1. Récipient servant à ranger des cassettes à bande magnétique, comportant un boîtier possédant une ouverture dans l'un de ses petits côtés, un tiroir logeant la cassette et pouvant être déplacé le long de guides, par un dispositif à ressort dans le boîtier, depuis une position de rangement, dans laquelle il est situé dans le boîtier et verrouillé de façon amovible, dans une position fixée par des butées, dans laquelle la cassette peut être retirée ou insérée, et possédant une plaque avant qui masque l'ouverture du boîtier dans la position de rangement et à laquelle se raccordent des parois latérales, caractérisé en ce que le tiroir possède intérieurement des surfaces de guidage le long desquelles une cassette devant être insérée peut être guidée dans le tiroir jusque dans une position de repos, dans laquelle un espace intercalaire suffisant pour recevoir la cassette subsiste entre cette dernière et au moins l'une des parois latérales.

2. Récipient selon la revendication 1, caractérisé en ce que la position de repos est définie par des tétons de blocage disposés sur la plaque inférieure du tiroir et s'engageant dans les moyeux de bobinage de la bande de la cassette.

3. Récipient selon la revendication 1, caractérisé en ce que l'autre paroi latérale possède une découpe située à l'opposé de l'espace intercalaire.

4. Récipient selon la revendication 2, pour des cassettes dont les axes des moyeux d'enroulement de la bande sont asymétriques par rapport au centre de la cassette, caractérisé en ce que le tiroir est dimensionné de manière à recevoir la cassette dans les deux positions de repos possibles et les surfaces de guidage de la cassette sont formées dans une position telle par rapport aux tétons de blocage que, dans les deux positions de repos possibles, les moyeux peuvent être emmanchés sur les tétons de blocage.

Fig. 1

Fig. 2

EP 0 189 479 B1

30 32
34
42
40
28
28
44
44
36
26
38